# EUROPÄISCHE PATENTANMELDUNG

(11) **EP 4 627 901 A1**
(43) Veröffentlichungstag der Anmeldung: **08.10.2025**
(21) Anmeldenummer: 25165926.4
(22) Anmeldetag: 25.03.2025
(51) Int. Cl.: A01C 5/04, A01C 11/02

(54) **MOBILE PFLANZVORRICHTUNG UND VERFAHREN ZUM REGELMÄSSIGEN SETZEN VON PFLANZEN**

(30) Priorität: 28.03.2024 DE 202024101571 U; 30.08.2024 DE 202024104964 U
(71) Anmelder: Reil & Eichinger GmbH, 93149 Nittenau (DE)
(72) Erfinder: EICHINGER, Markus, 93149 Nittenau (DE)
(74) Vertreter: Benninger, Johannes

(57) **Zusammenfassung**

Es sind eine mobile Pflanzvorrichtung (10) sowie ein Verfahren zum regelmäßigen Setzen von Pflanzen mittels einer solchen mobilen Pflanzvorrichtung (10) offenbart.

Die mobile Pflanzvorrichtung (10) umfasst ein insbesondere manuell gesteuertes und durch einen Benutzer (58) begleitetes Fahrzeug (12) mit motorischem Antrieb (20). Das Fahrzeug (12) weist einen Aufbau (16) mit frontseitig angeordneter Fräs- und/oder Bohreinheit (24) zur Ausbildung von Pflanzlöchern (34) in einem Boden (36) und mit heckseitig angeordneter Pflanzeinheit (26) zum Einsetzen von Pflanzen in die jeweils vorbereiteten Pflanzlöcher (34) auf.

Bei dem Verfahren werden mittels einer frontseitig am Fahrzeug (12) angeordneten Fräs- und/oder Bohreinheit (24) Pflanzlöcher (34) in einem Boden (36) ausgebildet, wonach mit einer heckseitig am Fahrzeug (12) angeordneten Pflanzeinheit (26) Pflanzen in die jeweils vorbereiteten Pflanzlöcher (34) eingesetzt werden.

## Beschreibung

Die vorliegende Erfindung betrifft eine mobile Pflanzvorrichtung, die insbesondere für den landwirtschaftlichen, für den forstwirtschaftlichen und/oder für den gartenbaulichen Einsatz vorgesehen sein kann. Weiterhin betrifft die Erfindung ein Verfahren zum regelmäßigen Setzen von Pflanzen mittels einer mobilen Pflanzvorrichtung.

Das manuelle Setzen von Pflanzen kann insbesondere in Reihen erfolgen, wobei die Abstände normalerweise vorgegeben sind. So werden Forstpflanzen normalerweise immer in Reihen gepflanzt, wobei je nach gepflanzter Baumart die Reihenabstände und auch der jeweilige Pflanzenabstand in der Reihe variieren können. Bei händischer Pflanzung wird in der Reihe eine Schnur mit Markierungen oder ein Maßband gespannt oder einfach Schrittmaß genommen, um z.B. einen Pflanzenabstand in der Reihe von 1,5m oder 2,0m zuverlässig einhalten zu können.

Da die manuell geführten Pflanzwerkzeuge bei größerer Anzahl von zu setzenden Pflanzen rasch an ihre Grenzen stoßen, ist es sinnvoll, hierfür auf Maschinenhilfe zurückzugreifen.

Angesichts der spezifischen Anforderungen, die für einen Maschineneinsatz im Wald gelten, kann es als vorrangiges Ziel der vorliegenden Erfindung betrachtet werden, eine mobile Pflanzvorrichtung zur Verfügung zu stellen, die sich aufgrund ihrer konstruktiven Besonderheiten für einen forstwirtschaftlichen Einsatz eignet. Zudem soll die Pflanzvorrichtung eine Reihenpflanzung einer größeren Anzahl von Forstpflanzen unterstützen. Außerdem besteht ein Ziel der vorliegenden Erfindung darin, ein verbessertes und vereinfachtes Verfahren zum Setzen von Pflanzen zur Verfügung zu stellen, insbesondere unter Verwendung einer solchen mobilen Pflanzvorrichtung.

Diese Ziele der Erfindung werden mit den Gegenständen der unabhängigen Ansprüche erreicht. Merkmale vorteilhafter Weiterbildungen der Erfindung finden sich in den jeweiligen abhängigen Ansprüchen.

So schlägt die Erfindung zur Erreichung der genannten Ziele eine mobile Pflanzvorrichtung mit den Merkmalen des unabhängigen Anspruchs vor. Diese erfindungsgemäße mobile Pflanzvorrichtung eignet sich insbesondere für den landwirtschaftlichen, für den forstwirtschaftlichen und/oder für den gartenbaulichen Einsatz. Grundsätzlich eignet sich die erfindungsgemäße mobile Pflanzvorrichtung jedoch für jegliche Reihenpflanzungen, unabhängig von ihrem spezifischen Anwendungs- oder Einsatzfall.

Die erfindungsgemäße mobile Pflanzvorrichtung umfasst ein insbesondere manuell gesteuertes und durch einen Benutzer begleitetes Fahrzeug mit motorischem Antrieb, wobei das Fahrzeug einen Aufbau mit frontseitig angeordneter Fräs- und/oder Bohreinheit zur Ausbildung von Pflanzlöchern in einem Boden und mit heckseitig angeordneter Pflanzeinheit zum Einsetzen von Pflanzen in die jeweils vorbereiteten Pflanzlöcher aufweist.

Am Aufbau der mobilen Pflanzvorrichtung ist die erwähnte Fräs- und/oder Bohreinheit frontseitig angeordnet, die bspw. einen motorischen Drehantrieb und einen heb- und senkbaren rotierenden Werkzeugkopf mit daran angeordnetem Fräs- und/oder Bohrwerkzeug aufweisen kann. Die am Aufbau des Fahrzeuges frontseitig angeordnete Fräs- und/oder Bohreinheit ist vorzugsweise verstellbar ausgebildet.

Zudem kann vorgesehen sein, dass die am Aufbau des Fahrzeuges frontseitig angeordnete Fräs- und/oder Bohreinheit sich zwischen den Spuren der Bodenantriebe des Fahrwerks des Fahrzeuges befindet und in horizontaler Längsrichtung entlang des Aufbaus verstellbar und/oder gegenüber dem Aufbau teleskopierbar ist.

Somit können in gewünschter Tiefe und in gewünschten Abständen die Pflanzlöcher mit jeweils benötigtem Durchmesser maschinell hergestellt werden.

Das zum Herstellen der Pflanzlöcher eingesetzte Werkzeug kann wahlweise austauchbar sein, so dass damit unterschiedliche Pflanzlöcher ausgeformt werden können. Das Fräs- und/oder Bohrwerkzeug kann insbesondere mit mehreren Fräszinken ausgestattet sein, bspw. mit zwei oder mehr Fräszinken. Diese Fräszinken können bspw. jeweils vertikale Abschnitte aufweisen, die in hierzu abgewinkelte Zinkenspitzen übergehen.

Die Zinkenspitzen können gegenüber der jeweiligen Längsmittelachse der zugehörigen vertikalen Zinkenabschnitte bspw. in einem Winkel von zwischen etwa 15° bis etwa 50° abgewinkelt sein. Insbesondere können die Zinkenspitzen jeweils Winkel von etwa 15° bis 25° aufweisen, um den sie gegenüber der jeweiligen Längsmittelachse des vertikalen Zinkenabschnittes abgewinkelt sind.

Außerdem kann vorgesehen sein, dass zwei oder mehr Fräszinken nicht symmetrisch zu einer Rotationsachse des Werkzeuges angeordnet sind, sondern in jeweils unterschiedlichen Abständen zur Rotationsachse des Werkzeuges. Einer von mehreren Fräszinken kann bspw. einen kleineren Abstand zur Rotationsachse aufweisen, während ein anderer Fräszinken einen größeren Abstand zur Rotationsachse aufweisen kann. Durch solchermaßen unsymmetrisch am rotierenden Werkzeug verankerte Fräszinken kann sich ein Fräsbild im Boden erzielen lassen, das sich von einem typischen Bohrbild eines Erdbohrers unterscheidet, denn die abgewinkelten Fräszinken lockern das Pflanzloch unterschiedlich und unregelmäßig auf und sorgen dafür, dass keine regelmäßige Trichterform entsteht.

Außerdem kann vorgesehen sein, dass zumindest einer von mehreren Fräszinken in unterschiedliche Winkelpositionen bezüglich seiner Längsmittelachse gebracht sein kann. D.h. zumindest einer der Fräszinken kann um seine Längsmittelachse verdreht im Werkzeug montiert sein oder werden, wodurch auch die abgewinkelte Zinkenspitze in eine andere Richtung weisen kann als die Zinkenspitze des anderen Fräszinkens oder mindestens eines anderen von mehreren Fräszinken.

So kann bspw. die Zinkenspitze desjenigen Fräszinkens, der den kleineren Abstand zur Rotationsachse des Werkzeuges aufweist, in radialer Richtung nach außen weisen. Dagegen kann der andere Fräszinken, der den größeren Abstand zur Rotationsachse des Werkzeuges aufweist, in verdrehter Richtung montiert sein, bspw. um ca. 90° um seine Längsmittelachse verdrehter Position. Hierdurch weist seine Zinkenspitze nicht radial nach außen, sondern kann bspw. in tangentialer Richtung zu einem Umfang des Werkzeuges orientiert sein.

Vorzugsweise kann diese Drehposition mindestens eines der beiden Fräszinken oder der mehreren Fräszinken unterschiedlich gewählt werden, so dass durch unterschiedliche Drehwinkel, in denen der Fräszinken montiert werden kann, die Aggressivität des rotierenden Fräs- und/oder Bohrwerkzeuges variiert und entsprechend den jeweiligen Bedürfnissen beim Herstellen eines Pflanzlochs eingestellt werden kann.

Bei einer weiteren Variante des Fräs- und/oder Bohrwerkzeuges kann zudem ein mittiger Führungszinken vorgesehen sein, der vorzugsweise mit der Rotationsachse des Werkzeuges fluchtet, wodurch er als stabilisierender Führungsdorn dienen kann, wenn das Werkzeug in den Boden eingesenkt wird, um dort ein Pflanzloch herzustellen. Ein solcher optionaler Führungszinken kann hinsichtlich seiner Formgebung und seiner Dimensionierung mit den zur Spitze hin jeweils abgewinkelten Fräszinken korrespondieren, wobei der wesentliche Unterschied darin besteht, dass die sich nach unten hin verjüngende Spitze des Führungszinkens nicht gegenüber seinem vertikalen Zinkenabschnitt abgewinkelt ist, sondern sich von diesem vertikalen Zinkenabschnitt in gestreckter Form weiter fortsetzt. Der Führungszinken befindet sich somit in seiner ganzen Länge in der Rotationsachse des Werkzeuges, so dass er die stabilisierende Funktion beim Herstellen von Pflanzlöchern in gewünschter Weise ausüben kann.

Außerdem ist bei der erfindungsgemäßen mobilen Pflanzvorrichtung die heckseitig angeordnete Pflanzeinheit vorzugsweise motorisch gegenüber dem Aufbau heb- und senkbar, insbesondere im Zusammenhang mit dem Einsetzen von Pflanzen. Die Pflanzeinheit kann bspw. ein Fallrohr mit unterseitig klappbarer Öffnung zum Aufweiten des jeweils im Boden ausgebildeten Pflanzlochs beim Einsetzen einer Pflanze aufweisen.

Der besondere Vorteil der erfindungsgemäßen mobilen Pflanzvorrichtung besteht darin, dass sowohl die Pflanzeinheit als auch die Fräs- und/oder Bohreinheit gleichzeitig nach unten fahren können. Die Fräseinheit lockert den Boden auf, während die Pflanzeinheit in das gefräste oder gebohrte Loch die Pflanze setzen kann. Durch die mechanisch oder hydraulisch am Trägerfahrzeug verstellbare Fräs- oder Bohreinheit wird automatisch der Abstand von Pflanze zu Pflanze in der Reihe festgelegt, und es muss nicht mehr gemessen werden oder eine Schnur bzw. Maßband gespannt werden bzw. Schrittmaß genommen werden. Durch den exakt eingehalten Abstand in der Reihe ist später eine maschinelle Pflege mit einer Mulch- oder Mähraupe möglich.

Ein weiterer Vorteil der erfindungsgemäßen Pflanzvorrichtung besteht darin, dass Containerpflanzen nicht erst aus dem Pflanzcontainer genommen werden und in ein Pflanzaggregat bestückt werden müssen, da diese direkt von Hand in das Pflanzrohr gegeben werden können und nach Öffnen der unterseitigen Klappe nach unten fallen und im Pflanzloch landen können.

Weiterhin ist das Fahrzeug der erfindungsgemäßen mobilen Pflanzvorrichtung vorzugsweise mit einem Fahrwerk ausgestattet, welches angetriebene Raupen- oder Kettenlaufwerke zur fahrenden Ortsveränderung der mobilen Pflanzvorrichtung umfasst. Diese beiden parallelen Raupen- oder Kettenlaufwerke sind sinnvollerweise unabhängig voneinander motorisch antreibbar und verzögerbar, so dass eine gute Manövrierbarkeit und eine Wendemöglichkeit auf engstem Raum gegeben ist.

Die mobile Pflanzvorrichtung kann außerdem mit einem Steuerungsterminal mit Betätigungshebeln ausgestattet sein, welche manuelle Steuerungsvorgaben zur Steuerung der Fräs- und/oder Bohreinheit bzw. deren Positionsveränderungen gegenüber dem Aufbau, zur Steuerung der Pflanzeinheit und/oder zur Antriebssteuerung der Raupen- oder Kettenlaufwerke erlauben.

Vorzugsweise kann der erfindungsgemäße mobile Pfahlsetzer mit einem Verbrennungsmotor zur energetischen Versorgung aller Antriebe, d.h. der Fahrantriebe sowie der Stellantriebe für die Bohr-/Fräs- und Pflanzeinheiten etc., ausgestattet sein. Eine sinnvolle Ausstattungsvariante sieht hierbei eine zentrale hydraulische Druckversorgung vor, die mit dem Verbrennungsmotor angetrieben wird, so dass alle hydraulischen Verbraucher, Aktoren, Motoren etc. von der zentralen Druckversorgung gespeist werden können.

Die Gurtbandlaufwerke können in diesem Fall vorteilhafterweise jeweils mit hydrostatischem Fahrantrieb ausgestattet sein.

Dies schließt jedoch eine alternative Variante mit elektrischen Energieversorgungen keineswegs aus, wobei auch die zentrale elektrische Energieversorgung grundsätzlich keinen generatorischen Antrieb durch einen Verbrennungsmotor erfordert, sondern bspw. mittels wiederaufladbarer Akkumulatoren erfolgen kann, die auf dem Fahrzeug mitgeführt werden können. In diesem Fall kann es von Vorteil sein, die Gurtbandlaufwerke durch Elektromotoren anzutreiben.

Das Raupen- oder Kettenlaufwerk der erfindungsgemäßen mobilen Pflanzvorrichtung ermöglicht dessen hohe Geländegängigkeit und gute Manövrierbarkeit, da derartige Fahrwerke, die durch zwei parallele Gurtbandlaufwerke gebildet sind, einen unabhängigen Antrieb der beiden Gurtbandlaufwerke sowie deren unabhängige Verzögerbarkeit erlaubt. Indem die Laufwerke unabhängig voneinander antreibbar und verzögerbar sind, wird das Fahrzeug sehr gut manövrierbar und kann bedarfsweise auch auf der Stelle drehen. Die Gurtbandlaufwerke ermöglichen eine Manövrierbarkeit im unwegsamen Gelände, im Forst sowie auf weichem Untergrund und weisen den Vorteil der Bodenschonung auf. Da solchermaßen keine hohen Auflagedrücke in weichen Untergrund übertragen werden, ist insbesondere im Forsteinsatz ein erheblicher Vorteil gegenüber Radfahrwerken gegeben, die gegenüber Raupen- oder Kettenlaufwerken eine deutliche geringere Aufstandsfläche erzeugen. Dagegen sind Gurtbandlaufwerke generell in der Lage, auf ihren Fahrspuren eine deutlich geringere Bodenverdichtung zu erzeugen, was im forstwirtschaftlichen Einsatz abseits von Wegen einen großen Vorteil gegenüber schwereren Maschinen oder solchen mit Radfahrwerken bieten kann.

Wahlweise können einzelne der Funktionen der mobilen Pflanzvorrichtung mittels einer Fernbedienung steuerbar sein. Somit könnte die mobile Pflanzvorrichtung grundsätzlich auch als eine Variante eines FTS (fahrerloses Transportsystem) einsetzbar sein. Die Funktionen können, sofern dies im Einsatzfall sinnvoll ist, auf semiautomatische oder vollautomatische Weise steuerbar sein. Bei einer solchen Variante kann es sinnvoll sein, geeignete Sicherheitsabschaltungen vorzunehmen, bspw. in Kombination mit einem Kollisionsschutz und/oder Anfahrschutz; hier stoppt die Maschine, wenn sie kontaktiert wird oder mit einem Hindernis kollidiert.

Grundsätzlich handelt es sich bei der hier beschriebenen mobilen Pflanzvorrichtung um ein kleines Fahrzeug, das mit Raupen- oder Kettenlaufwerken ausgestattet ist und hinsichtlich seiner Manövrierbarkeit und seiner Dimensionen einem Minibagger ähnelt. Allerdings bietet die mobile Pflanzvorrichtung in der Regel keinen Fahrerplatz, sondern ist hinsichtlich ihrer Steuerbarkeit und dem Erfordernis, sie zu Fuß zu begleiten, eher mit einer kleineren mobilen Arbeitsbühne vergleichbar. Während solche mobilen Arbeitsbühnen jedoch in der Regel über eine Fernsteuerung verfügen, mit der weitgehend alle Funktionen und auch die motorische Fortbewegung auf ihren vier Rädern gesteuert werden können, ist eine solche Fernsteuerung im vorliegenden Fall typischerweise nur für den gesteuerten Antrieb der Raupen- oder Kettenlaufwerke sinnvoll einsetzbar. Dagegen dürfte es für die meisten Einsatzfälle nicht sinnvoll sein, auch die Funktionen der Fräs-/Bohreinheit und der Pflanzeinheit mittels Fernsteuerung zu steuern. Stattdessen ist bei der erfindungsgemäßen mobilen Arbeitsmaschine, d.h. der Pflanzvorrichtung, ein Steuerterminal vorzusehen, das über die notwendigen Betätigungshebel verfügt, um damit alle Funktionen, die im Zusammenhang mit den Lochbildungsvorgängen und den Pflanzungsvorgängen etc. stehen, durch manuelle Steuerungseingaben vorzunehmen.

Neben der in verschiedenen Ausführungsvarianten erläuterten mobilen Pflanzvorrichtung schlägt die Erfindung zur Erreichung der oben genannten Ziele ein Verfahren zum regelmäßigen Setzen von Pflanzen mittels einer solchen mobilen Pflanzvorrichtung vor, und dies insbesondere im Zusammenhang mit einem landwirtschaftlichen, einem forstwirtschaftlichen und/oder einem gartenbaulichen Einsatz. Bei der mobilen Pflanzvorrichtung handelt es sich um ein insbesondere manuell gesteuertes und durch einen Benutzer begleitetes Fahrzeug mit motorischem Antrieb. Bei dem erfindungsgemäßen Verfahren werden zunächst mittels einer frontseitig am Fahrzeug angeordneten Fräs- und/oder Bohreinheit Pflanzlöcher in einem Boden ausgebildet. Anschließend werden mit einer heckseitig am Fahrzeug angeordneten Pflanzeinheit Pflanzen in die jeweils vorbereiteten Pflanzlöcher eingesetzt.

Bei dem Verfahren kann insbesondere vorgesehen sein, dass die am Fahrzeug frontseitig angeordnete Fräs- und/oder Bohreinheit einen motorischen Drehantrieb und einen heb- und senkbaren rotierenden Werkzeugkopf mit daran angeordnetem Fräs- und/oder Bohrwerkzeug aufweist, mit dem die Pflanzlöcher in den Boden eingebracht werden.

Außerdem kann das Verfahren vorsehen, dass die Pflanzen mittels der ein Fallrohr oder Pflanzrohr mit unterseitig klappbarer Öffnung aufweisenden Pflanzeinheit in das Pflanzloch abgegeben und eingesetzt werden. Wahlweise können die Pflanzen in den Boden eingesetzt werden, nachdem das jeweils im Boden ausgebildete Pflanzloch mittels der unterseitig klappbaren Öffnung vor dem Einsetzen einer Pflanze aufgeweitet wurde.

Es sei an dieser Stelle ausdrücklich erwähnt, dass alle Aspekte und Ausführungsvarianten, die im Zusammenhang mit der erfindungsgemäßen mobilen Pflanzvorrichtung erläutert wurden, gleichermaßen Teilaspekte des erfindungsgemäßen Verfahrens zum Setzen von Pflanzen betreffen oder bilden können. Wenn daher an einer Stelle bei der Beschreibung oder auch bei den Anspruchsdefinitionen zur erfindungsgemäßen mobilen Pflanzvorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren zum Setzen von Pflanzen erläutert wurden, gleichermaßen Teilaspekte der erfindungsgemäßen mobilen Pflanzvorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße mobile Pflanzvorrichtung.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann sich, wie bereits oben mehrfach erwähnt, die oben schon in zahlreichen Ausführungsvarianten erläuterte erfindungsgemäße mobile Pflanzvorrichtung insbesondere für einen landwirtschaftlichen, für einen forstwirtschaftlichen und/oder für einen gartenbaulichen Einsatz eignen, oder sie kann insbesondere für einen landwirtschaftlichen, für einen forstwirtschaftlichen und/oder für einen gartenbaulichen Einsatz vorgesehen sein. Wenn im vorliegenden Zusammenhang diese hier gewählte Begrifflichkeit der mobilen Pflanzvorrichtung verwendet wird, so kann damit deshalb insbesondere eine landwirtschaftlich, forstwirtschaftlich und/oder gartenbaulich einsetzbare mobile Maschine gemeint sein, welche die nachfolgend erläuterten Ausstattungsmerkmale und den nachfolgend beschriebenen Funktionsumfang aufweist.

Wie oben schon mehrfach erläutert, kann die mobile Pflanzvorrichtung durch ein Fahrzeug mit einem unterseitigen Fahrwerk und einem oberseitigen Aufbau gebildet sein, wobei der Aufbau einen Rahmen umfassen kann, auf dem ein motorischer Antrieb positioniert ist, wobei dieser motorische Antrieb typischerweise durch eine Brennkraftmaschine gebildet sein kann, die zur Verbrennung flüssiger Brennstoffe ausgelegt ist. Der motorische Antrieb dient typischerweise als Antriebsmotor für das Fahrwerk sowie für jegliche weitere Aggregate der mobilen Pflanzvorrichtung, die nachfolgend noch zu beschreiben sind.

Das Fahrwerk kann insbesondere durch zwei parallele Gurtbandlaufwerke, d.h. durch zwei längsseitig am Rahmen befindliche Ketten- oder Raupenlaufwerke gebildet sein, die insbesondere unabhängig voneinander antreibbar und verzögerbar sind, um eine gewünschte Manövrierbarkeit des Fahrzeuges bzw. der gesamten mobilen Pflanzvorrichtung zu ermöglichen, so dass diese nicht nur durch eigenen Antrieb an schwer zugängliche Einsatzorte gelangen kann, sondern bedarfsweise auch sehr enge Kurvenmanöver ausführen und/oder auf der Stelle drehen kann.

Der ungefähr mittig oder ggf. leicht in Fahrtrichtung nach vorne gerückte und oberseitig am Rahmen verankerte motorische Antrieb kann bspw. durch einen Verbrennungsmotor mit Fremdzündung (Benzinmotor) gebildet sein, wahlweise auch durch einen Selbstzünder (Dieselmotor), so dass damit ein Hydraulikkreislauf gespeist werden kann, der alle oder zumindest einige der erforderlichen Antriebe und Stellelemente der Pflanzvorrichtung versorgt. Wahlweise können zudem die für den Antrieb der Gurtbandlaufwerke normalerweise vorgesehenen hydrostatischen Antriebsmotoren von einem solchen Hydraulikkreislauf gespeist werden. Hinzu kommen ggf. Stellzylinder um Heben und Senken der Pflanzeinheit und/oder für den Antrieb sowie zum Verstellen der Fräs- und/oder Bohreinheit.

Wahlweise können die Gurtbandlaufwerke auch über elektrische Antriebsmotoren verfügen, deren elektrische Energieversorgung über einen Generatorantrieb des Antriebsmotors erfolgen kann.

Am Aufbau sind zudem frontseitig eine Fräs- und/oder Bohreinheit und heckseitig eine Pflanzeinheit zum vertikalen Einsetzen von Pflanzen in die jeweils vorbereiteten Pflanzlöcher angeordnet.

Die frontseitig am Aufbau angeordnete Fräs- und/oder Bohreinheit umfasst einen motorischen Drehantrieb zum rotierenden Antrieb eines heb- und senkbaren Werkzeugkopfes mit daran angeordnetem Fräs- und/oder Bohrwerkzeug. Durch eine vertikale Absenkbewegung um einen definierten Betrag und gleichzeitigen rotierenden Antrieb des Werkzeugkopfes mitsamt dem daran angeordneten mitrotierenden Fräs- und/oder Bohrwerkzeug kann ein Pflanzloch in den Boden eingebracht werden.

Die mittels des rotierenden Fräs- und/oder Bohrwerkzeuges in den Boden einbringbaren Pflanzlöcher können durch die Ausstattung und Formgebung des Werkzeuges in gewissen Grenzen beeinflusst werden, was weiter unten anhand einer beispielhaften Gestaltung einer sinnvoll einsetzbaren Variante des Fräs- und/oder Bohrwerkzeuges noch näher erläutert werden soll.

Um diese Absenkbewegungen in vertikale Richtung um eine definierte Tiefe in den Boden sowie das anschließende Herausheben des Fräs- und/oder Bohrwerkzeuges aus dem geschaffenen Pflanzloch zu ermöglichen, ist die Fräs- und/oder Bohreinheit vorzugsweise an einem vertikal heb- und senkbaren Trägerabschnitt verankert, der wiederum an einem horizontalen Längsträger befestigt sein kann, so dass der Trägerabschnitt vorzugsweise entlang dem horizontalen Längsträger in horizontaler Richtung verstellbar und damit gegenüber dem Aufbau des Fahrzeuges teleskopierbar ausgeführt ist.

Diese horizontale Verstellbarkeit des vertikalen Trägerabschnittes mitsamt dem daran verankerten motorischen Drehantrieb der Fräs- und/oder Bohreinheit ermöglicht eine Verstellung der Pflanzabstände, wobei sich ein sinnvoller Pflanzabstand von bspw. ca. 1,5 Metern für viele Anwendungsfälle als sinnvoll erweist. Die horizontale Verstellbarkeit des vertikalen Trägerabschnittes mitsamt dem daran verankerten motorischen Drehantrieb der Fräs- und/oder Bohreinheit erlaubt jedoch auch andere Pflanzabstände, die größer oder kleiner als die genannten 1,5 Meter sein können. Da der Fahrzeugführer bei seiner langsamen Überfahrt in gerader Richtung jeweils erkennen kann, wenn sich die Pflanzeinheit über einem zuvor geschaffenen Pflanzloch befindet, wird er in der richtigen Position die Pflanzvorrichtung aktivieren können, während frontseitig gleichzeitig ein weiteres Pflanzloch in den Boden gebohrt werden kann.

Die einfache Steuerbarkeit des Vorschubes des Fahrzeuges erlaubt ihm bei langsamer Fahrt eine sehr präzise Pflanzung in sehr exakten Abständen, ohne dass aufwändige sensorische Maßnahmen und/oder eine satellitengestützte Positionssteuerung o. dgl. notwendig wären. Somit wird dem Anwender eine sehr kostengünstige Maschine zur Durchführung des erfindungsgemäßen Verfahrens zur Verfügung gestellt, die auf teure sensorische Ausstattungsmerkmale problemlos verzichten kann und dennoch die gewünschten Pflanzungen in hoher Qualität ausführen kann.

Die oben erwähnte horizontale Verstellbarkeit der am Aufbau des Fahrzeuges frontseitig angeordneten Fräs- und/oder Bohreinheit ermöglicht eine Justierbarkeit und eine Abstandsveränderung zwischen der frontseitigen Fräs- und/oder Bohreinheit und der heckseitigen Pflanzeinheit. Dies ist insbesondere dann sinnvoll, wenn die erfindungsgemäße mobile Pflanzvorrichtung für unterschiedliche Pflanzabstände genutzt werden soll, da die eingestellte Distanz zwischen der frontseitigen Fräs- und/oder Bohreinheit und der heckseitigen Pflanzeinheit die Abstände der gesetzten Pflanzen definiert.

Die heckseitig am Aufbau angeordnete Pflanzeinheit umfasst im Wesentlichen ein vertikal verlaufendes Pflanzrohr, in welche die zu setzenden Pflanzen insbesondere manuell hineingegeben werden können, um in das jeweils vorbereitete Pflanzloch eingesetzt zu werden, wenn sich die Pflanzeinheit genau über dem passenden Pflanzloch befindet. Die Pflanzeinheit ist vorzugsweise mit einer hydraulischen Absenk- und Hebeeinrichtung ausgestattet, die ein vertikales Absenken sowie ein entsprechendes Anheben an der passenden Position erlaubt.

Außerdem kann an der Unterseite des solchermaßen mittels der hydraulischen Absenk- und Hebeeinrichtung heb- und senkbaren Pflanzrohrs eine schwenkbare Klappe angeordnet sein, die in geschlossener Lage einerseits das Pflanzrohr unterseitig verschließt und verhindert, dass die in das Pflanzloch einzusetzende Pflanze bereits vorzeitig nach unten aus dem Pflanzrohr herausgleiten kann. Sobald das Pflanzrohr in das vorbereitete Pflanzloch abgesenkt ist, kann die schwenkbare Klappe mittels eines hydraulischen Schwenkantriebes o. dgl. geöffnet werden, um die Pflanze freizugeben, und um gleichzeitig mit Hilfe der Formgebung der Klappe das Pflanzloch bedarfsweise aufzuweiten, was etwa bei nachgerutschter Erde und teilweise eingefallenen Rändern des Pflanzlochs sinnvoll sein kann.

Vorzugsweise erfolgen die Absenkbewegungen der Bohr- und Pflanzeinheiten annähernd gleichzeitig. Während die Fräs- und/oder Bohreinheit den Boden auflockert, setzt die Pflanzeinheit in das gefräste oder gebohrte Loch die jeweilige Pflanze. Durch die mechanisch oder hydraulisch am Trägerfahrzeug verstellbare Fräs- und/oder Bohreinheit wird automatisch der Abstand von Pflanze zu Pflanze in der Reihe festgelegt, und es muss nicht mehr gemessen werden oder eine Schnur bzw. Maßband gespannt werden bzw. Schrittmaß genommen werden. Durch den exakt eingehalten Abstand in der Reihe ist später eine maschinelle Pflege mit einer Mulch- oder Mähraupe o. dgl. Pflegemaschine möglich.

Ein weiterer Vorteil der beschriebenen Vorrichtung besteht darin, dass üblicherweise verwendeten Containerpflanzen nicht erst aus dem Pflanzcontainer genommen werden müssen, um damit ein Pflanzaggregat zu bestücken, sondern die Pflanzen können direkt von Hand in das Pflanzrohr gegeben werden und somit in gelenkter Weise direkt nach unten fallen.

Vorzugsweise können sich die am Aufbau des Fahrzeuges frontseitig angeordnete Fräs- und/oder Bohreinheit sowie die heckseitig angeordnete Pflanzeinheit beide in Fluchtung in Längsrichtung befinden. Außerdem ist es sinnvoll, beide Einheiten zwischen den Spuren der durch die Gurtbandlaufwerke gebildeten Bodenantriebe des Fahrwerks des Fahrzeuges anzuordnen, vorzugsweise mittig, d.h. im Bereich der horizontalen Mittellängsachse des Fahrzeuges, bezogen auf dessen Fahrtrichtung.

Um die genannten wesentlichen Funktionen zu steuern sowie um die Vorwärts- und Rückwärtsfahrten des Fahrzeuges zu steuern, kann sich in einem hinteren Bereich des Fahrzeuges, bspw. an einem Rahmenausleger für die Pflanzeinheit auch ein Steuerterminal o. dgl. befinden, das mit verschiedenen Betätigungshebeln zur manuell vorgebbaren Funktionssteuerung der mobilen Pflanzvorrichtung ausgestattet sein kann.

Im vorliegenden Fall wurde die Festlegung gewählt, dass sich die Fräs- und/oder Bohreinheit frontseitig an der als Raupenfahrzeug ausgebildeten mobilen Pflanzvorrichtung befindet, während das Antriebsaggregat ungefähr mittig angeordnet ist. Die beiden Gurtbandlaufwerke definieren somit die beiden Längsseiten des Raupenfahrzeuges. Somit befindet sich das Steuerterminal mit den Betätigungshebeln zur manuellen Funktionssteuerung im hinteren Bereich in Nähe der Pflanzeinheit, so dass das Steuerterminal von einem hinter dem Fahrzeug stehenden Benutzer erreichbar ist, der damit auch mit seinen Händen an die Betätigungshebel gelangt.

Die Antriebssteuerung des Fahrwerks der erfindungsgemäßen mobilen Pflanzvorrichtung kann wahlweise auch über eine Fernbedienung vorgegeben werden, so dass die Pflanzvorrichtung ggf. auch mit einer semiautomatischen oder vollautomatischen Steuerung ausgestattet werden kann. Entsprechendes gilt für die Vorbereitung der Pflanzlöcher, da diese sinnvollerweise in der jeweils gleichen Tiefe zu setzen sind. Außerdem kann die Positionierung der Pflanzeinheit über einem zuvor vorbereiteten Pflanzloch in automatischer Weise durch entsprechende Vorwärtsbewegung des Fahrzeuges mittels der Gurtbandlaufwerke vorgegeben werden.

Da jedoch das Setzen der einzelnen Pflanzen in die vorbereiteten Pflanzlöcher eine manuelle Betätigung verlangt, ist eine solche automatische Steuerung für die entsprechenden Funktionalitäten nicht gleichermaßen sinnvoll.

Weiterhin sollen nachfolgend zwei unterschiedliche Ausführungs- und Gestaltungsvarianten eines rotierenden Fräs- und/oder Bohrwerkzeuges beschrieben werden, die an der erfindungsgemäßen mobilen Pflanzvorrichtung zum Einsatz kommen können.

So kann das erwähnte Fräs- und/oder Bohrwerkzeug an der Fräs- und/oder Bohreinheit montiert und bedarfsweise gegen ein anders gestaltetes Fräs- und/oder Bohrwerkzeug ausgetauscht werden. Zu diesem Zweck kann das Werkzeug bspw. mit einem oberseitigen Schaft ausgestattet sein, welcher der lösbaren Verbindung des Werkzeuges unterseitig am rotierenden Werkzeugkopf dienen kann. Der Schaft mündet vorzugsweise unterseitig in einer Trägerscheibe, die bspw. eine flache Kontur mit kreisrundem Querschnitt aufweisen kann.

Unterseitig an der Trägerscheibe ist mindestens ein Fräszinken angeordnet, wobei typischerweise zumindest zwei solcher Fräszinken vorhanden sein sollten, die in ihrer jeweiligen Längsrichtung in mehrere Abschnitte unterteilt sind, die ineinander übergehen. Ein Verankerungsabschnitt jedes der beiden Fräszinken sorgt für deren jeweilige Verankerung in der Trägerscheibe, die hierfür jeweils mit passenden Durchbrüchen ausgestattet sein kann. Die Verankerungsabschnitte der beiden Fräszinken können die Durchbrüche durchdringen und jeweils oberseitig aus der flachen Stirnseite der Trägerscheibe herausragen. Sie können aber auch an der Unterseite der Trägerscheibe verschweißt sein.

Unterseitig setzt sich jeder der beiden Fräszinken in einem vertikalen Zinkenabschnitt mit konstantem Querschnitt fort, der in einer gegen den vertikalen Zinkenabschnitt abgewinkelte Zinkenspitze mündet. Die Zinkenspitzen können gegenüber der jeweiligen Längsmittelachse des vertikalen Zinkenabschnittes bspw. in einem Winkel von zwischen etwa 15° bis etwa 50° abgewinkelt sein. Somit ergibt sich eine Gestaltung mit den beiden in der Trägerscheibe verankerten Fräszinken, deren längerer vertikaler Abschnitt unterseitig aus der Trägerscheibe ragt und sich jeweils in ihrer abgewinkelten Zinkenspitze fortsetzt, wobei die Zinkenspitzen bspw. den erwähnten Winkel von etwa 15° bis 25° aufweisen können, um den sie gegenüber der jeweiligen Längsmittelachse des vertikalen Zinkenabschnittes abgewinkelt sein können.

Es kann vorgesehen sein, dass die beiden Fräszinken nicht symmetrisch an gegenüberliegenden Stellen der Trägerscheibe verankert sind, sondern jeweils unterschiedliche Abstände zum Scheibenmittelpunkt aufweisen, welcher konzentrisch zum Schaft ist. So kann einer der beiden Durchbrüche zur Aufnahme des oberen Verankerungsabschnittes eines Fräszinkens näher zum Schaft hingerückt sein und somit vom Scheibenmittelpunkt einen kleineren Abstand aufweisen. Dieser Fräszinken befindet sich somit näher am Schaft sowie am Scheibenmittelpunkt. Dagegen kann der zweite Durchbruch zur Aufnahme des oberen Verankerungsabschnittes des anderen Fräszinkens weiter vom Schaft entfernt sein und vom Scheibenmittelpunkt einen größeren Abstand aufweisen. Dieser Fräszinken befindet sich somit näher am äußeren Scheibenrand und ist weiter vom Schaft sowie vom Scheibenmittelpunkt entfernt.

Durch diese unsymmetrisch an der Trägerscheibe verankerten beiden Fräszinken ergibt sich ein gewünschtes Fräsbild im Boden, welches sich von einem typischen Bohrbild eines Erdbohrers unterscheidet, denn die abgewinkelten Fräszinken lockern das Pflanzloch unterschiedlich und unregelmäßig auf und sorgen dafür, dass keine regelmäßige Trichterform entsteht.

Außerdem kann zumindest eine der Verankerungen des oberen Verankerungsabschnittes eines der beiden Fräszinkens in einer Weise ausgestaltet sein, dass der Fräszinken in unterschiedlichen Winkelpositionen bezüglich seiner Längsmittelachse im zugehörigen Durchbruch der Trägerscheibe montiert werden kann. D.h. zumindest einer der Fräszinken kann um seine Längsmittelachse verdreht in der Trägerscheibe montiert werden, wodurch auch die abgewinkelte Zinkenspitze in eine andere Richtung weisen kann als die Zinkenspitze des anderen Fräszinkens.

So kann bspw. die Zinkenspitze desjenigen Fräszinkens, der den kleineren Abstand zum Scheibenmittelpunkt aufweist, in radialer Richtung nach außen weisen, wie es bei derartigen Werkzeugen grundsätzlich zu erwarten wäre. Dagegen kann der andere Fräszinken, der den größeren Abstand zum Scheibenmittelpunkt aufweist, in verdrehter Richtung montiert sein, so dass er um ca. 90° um seine Längsmittelachse verdreht montiert ist. Hierdurch weist seine Zinkenspitze nicht radial nach außen, sondern weist in tangentiale Richtung zum Scheibenrand.

Vorzugsweise kann diese Drehposition mindestens eines der beiden Fräszinken unterschiedlich gewählt werden, so dass durch unterschiedliche Drehwinkel, in denen der Fräszinken montiert werden kann, die Aggressivität des rotierenden Fräs- und/oder Bohrwerkzeuges variiert und entsprechend den jeweiligen Bedürfnissen beim Herstellen eines Pflanzlochs eingestellt werden kann.

Eine weitere Variante des Fräs- und/oder Bohrwerkzeuges kann zusätzlich mit einem mittigen Führungszinken ausgestattet sein. Dieser optionale Führungszinken fluchtet mit dem oberseitigen Schaft des Werkzeuges und befindet sich somit unterseitig im Scheibenmittelpunkt der Trägerscheibe, so dass er als stabilisierender Führungsdorn dienen kann, wenn das Werkzeug in den Boden eingesenkt wird, um dort ein Pflanzloch herzustellen.

Der optionale Führungszinken kann hinsichtlich seiner Formgebung und seiner Dimensionierung mit den zur Spitze hin jeweils abgewinkelten Fräszinken korrespondieren, wobei der wesentliche Unterschied darin besteht, dass die sich nach unten hin verjüngende Spitze des Führungszinkens nicht gegenüber seinem vertikalen Zinkenabschnitt abgewinkelt ist, sondern sich von diesem vertikalen Zinkenabschnitt in gestreckter Form weiter fortsetzt. Der Führungszinken befindet sich somit in seiner ganzen Länge in der Mittelachse der Trägerscheibe sowie des Schaftes des Werkzeuges, so dass er die stabilisierende Funktion beim Herstellen von Pflanzlöchern in gewünschter Weise ausüben kann.

Die Fräszinken können jeweils eine Gesamtlänge aufweisen, die in etwa mit dem Durchmesser der Trägerscheibe übereinstimmen oder in einer ähnlichen Größenordnung liegen kann. Die Fräszinken können jedoch wahlweise auch kürzer oder länger sein. Die Länge der abgewinkelten Zinkenspitze kann vorzugsweise etwas geringer sein als die Länge des vertikalen Zinkenabschnittes.

Die Fräszinken können bspw. viereckige Querschnitte aufweisen, wobei die vertikalen Zinkenabschnitte konstante Querschnitte aufweisen können, während sich die Zinkenspitzen jeweils zu ihren unteren spitzen Enden gleichmäßig verjüngen können, wahlweise ebenfalls mit viereckigen Querschnitten. Jedoch sind auch andere Querschnitte und Konturen der Fräszinken möglich.

Vorzugsweise sind an der Trägerscheibe mindestens zwei Fräszinken in der beschriebenen Weise montierbar, wahlweise jedoch auch drei, vier oder mehr Fräszinken, die gleichmäßig oder ungleichmäßig verteilt an der Trägerscheibe angeordnet sein können. Mindestens einer von mehreren Fräszinken ist in kleinerem Abstand zum Scheibenmittelpunkt an der Trägerscheibe verankerbar. Mindestens einer von mehreren Fräszinken ist zudem im größeren Abstand zum Scheibenmittelpunkt an der Trägerscheibe verankerbar. Mindestens einer von mehreren Fräszinken ist zudem in unterschiedlichen Winkelpositionen um seine Längsmittelachse montierbar, so dass seine Zinkenspitze nach außen oder in tangentiale Richtung zum Scheibenumfang weisen kann.

Alle diese Ausführungen beziehen sich gleichermaßen auf die erfindungsgemäße mobile Pflanzvorrichtung sowie auf das Verfahren zum Setzen von Pflanzen, so dass sich hier jeweils die beschriebenen Vorteile und Besonderheiten ergeben.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Ausführungsvariante einer erfindungsgemäßen mobilen Pflanzvorrichtung in schematischer Seitenansicht.
Fig. 2 zeigt die mobile Pflanzvorrichtung gemäß Fig. 1 mit einem Benutzer, der an einem Steuerterminal steht und die Funktionen der Pflanzvorrichtung durch manuelle Betätigung der Steuerungs- und Betätigungshebel am Steuerterminal beeinflussen kann.
Figuren 3A und 3B zeigen in schematischen und perspektivischen Ansichten eine erste Ausführungsvariante eines rotierenden Fräs- und/oder Bohrwerkzeuges, das an der erfindungsgemäßen mobilen Pflanzvorrichtung zum Einsatz kommen kann.
Figuren 3C und 3D zeigen in schematischen und perspektivischen Ansichten eine zweite Ausführungsvariante des rotierenden Fräs- und/oder Bohrwerkzeuges, wie es an der mobilen Pflanzvorrichtung zum Einsatz kommen kann.

Für gleiche oder gleich wirkende Elemente der Erfindung werden identische Bezugszeichen verwendet. Ferner werden der Übersicht halber teilweise nur diejenigen Bezugsziffern in den einzelnen Figuren dargestellt, die für die Beschreibung der jeweiligen Figur erforderlich sind. Die dargestellten Ausführungsformen stellen lediglich Beispiele dar, wie die erfindungsgemäße Pflanzvorrichtung ausgestaltet sein kann und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

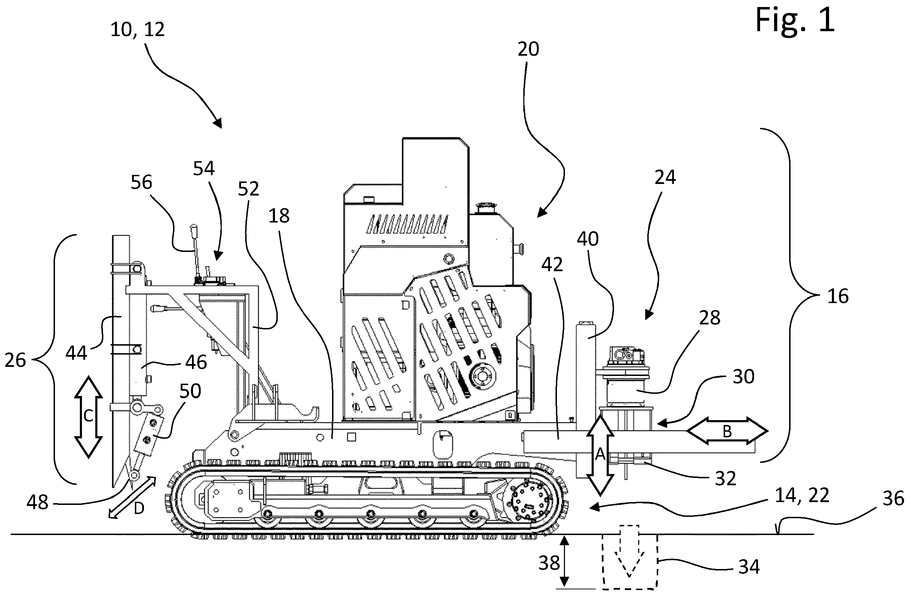

Die schematische Seitenansicht der Fig. 1 zeigt eine Ausführungsvariante einer erfindungsgemäßen mobilen Pflanzvorrichtung 10, die sich insbesondere für einen landwirtschaftlichen, für einen forstwirtschaftlichen und/oder für einen gartenbaulichen Einsatz eignet oder die insbesondere für einen landwirtschaftlichen, für einen forstwirtschaftlichen und/oder für einen gartenbaulichen Einsatz vorgesehen sein kann. Wenn im vorliegenden Zusammenhang diese hier gewählte Begrifflichkeit der mobilen Pflanzvorrichtung 10 verwendet wird, so ist damit eine landwirtschaftlich, forstwirtschaftlich und/oder gartenbaulich einsetzbare mobile Maschine gemeint, welche die nachfolgend erläuterten Ausstattungsmerkmale und den nachfolgend beschriebenen Funktionsumfang aufweist.

Wie es die schematische Ansicht der Fig. 1 erkennen lässt, ist die mobile Pflanzvorrichtung 10 durch ein Fahrzeug 12 mit einem unterseitigen Fahrwerk 14 und einem oberseitigen Aufbau 16 gebildet. Der Aufbau 16 umfasst einen Rahmen 18, auf dem ein motorischer Antrieb 20 positioniert ist, wobei dieser motorischer Antrieb 20 typischerweise durch eine Brennkraftmaschine gebildet ist, die zur Verbrennung flüssiger Brennstoffe ausgelegt ist. Der motorische Antrieb 20 dient typischerweise als Antriebsmotor für das Fahrwerk 14 sowie für jegliche weitere Aggregate der mobilen Pflanzvorrichtung 10, die nachfolgend noch zu beschreiben sind.

Das Fahrwerk 14 ist im gezeigten Ausführungsbeispiel durch zwei parallele Gurtbandlaufwerke 22, d.h. durch zwei längsseitig am Rahmen 18 befindliche Ketten- oder Raupenlaufwerke gebildet, die insbesondere unabhängig voneinander antreibbar und verzögerbar sind, um eine gewünschte Manövrierbarkeit des Fahrzeuges 12 bzw. der gesamten mobilen Pflanzvorrichtung 10 zu ermöglichen, so dass diese nicht nur durch eigenen Antrieb an schwer zugängliche Einsatzorte gelangen kann, sondern bedarfsweise auch sehr enge Kurvenmanöver ausführen und/oder auf der Stelle drehen kann.

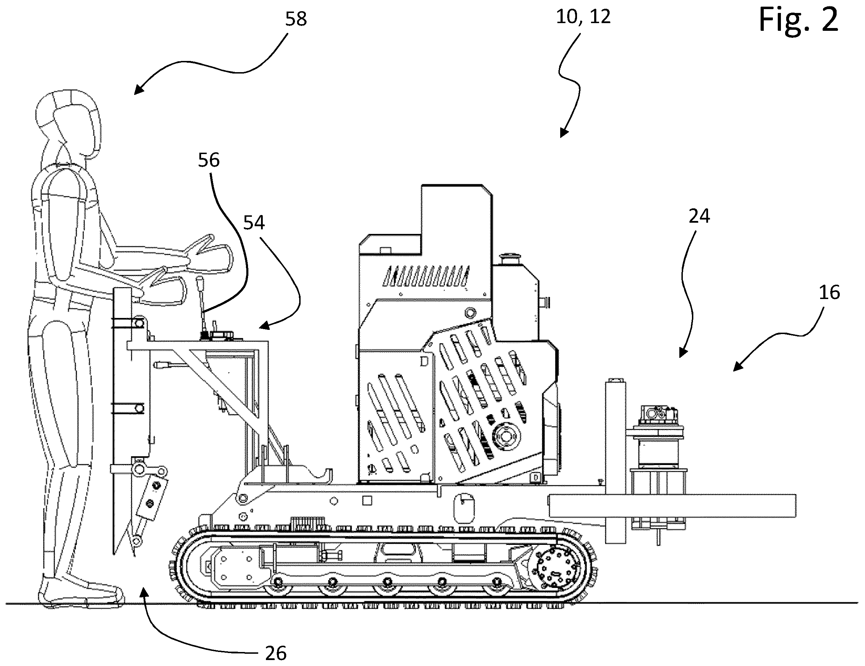

Der ungefähr mittig oder ggf. entsprechend der in den Figuren 1 und 2 gezeigten Darstellung leicht nach vorne gerückte und oberseitig am Rahmen 18 verankerte motorische Antrieb 20 kann bspw. durch einen Verbrennungsmotor mit Fremdzündung (Benzinmotor) gebildet sein, wahlweise auch durch einen Selbstzünder (Dieselmotor), so dass damit ein Hydraulikkreislauf gespeist werden kann, der alle oder zumindest einige der erforderlichen Antriebe und Stellelemente der Pflanzvorrichtung 10 versorgt. Wahlweise können zudem die für den Antrieb der Gurtbandlaufwerke 22 normalerweise vorgesehenen hydrostatischen Antriebsmotoren von einem solchen Hydraulikkreislauf gespeist werden. Hinzu kommen ggf. Stellzylinder um Heben und Senken der Pflanzeinheit und/oder für den Antrieb sowie zum Verstellen der Fräs- und/oder Bohreinheit.

Wahlweise können die Gurtbandlaufwerke 22 auch über elektrische Antriebsmotoren verfügen, deren elektrische Energieversorgung über einen Generatorantrieb des Antriebsmotors 20 erfolgen kann.

Am Aufbau 16 sind zudem frontseitig eine Fräs- und/oder Bohreinheit 24 und heckseitig eine Pflanzeinheit 26 zum vertikalen Einsetzen von Pflanzen (hier nicht gezeigt) in die jeweils vorbereiteten Pflanzlöcher angeordnet.

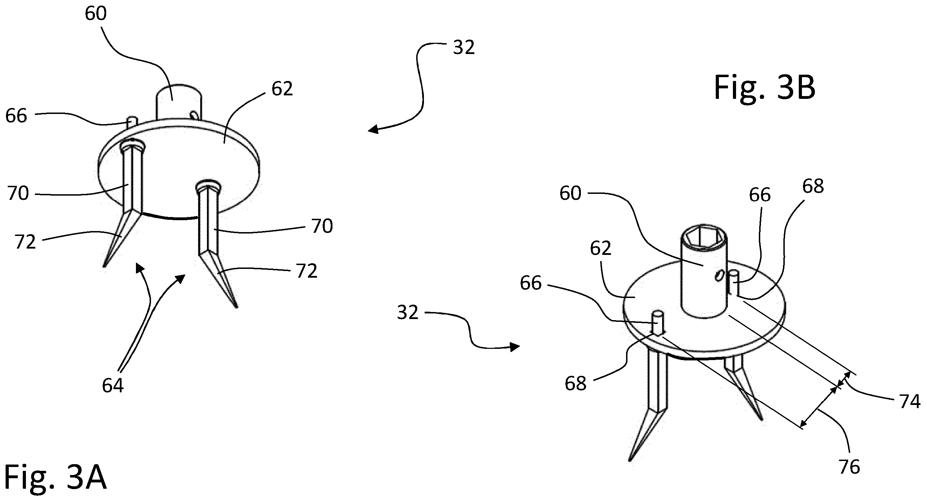

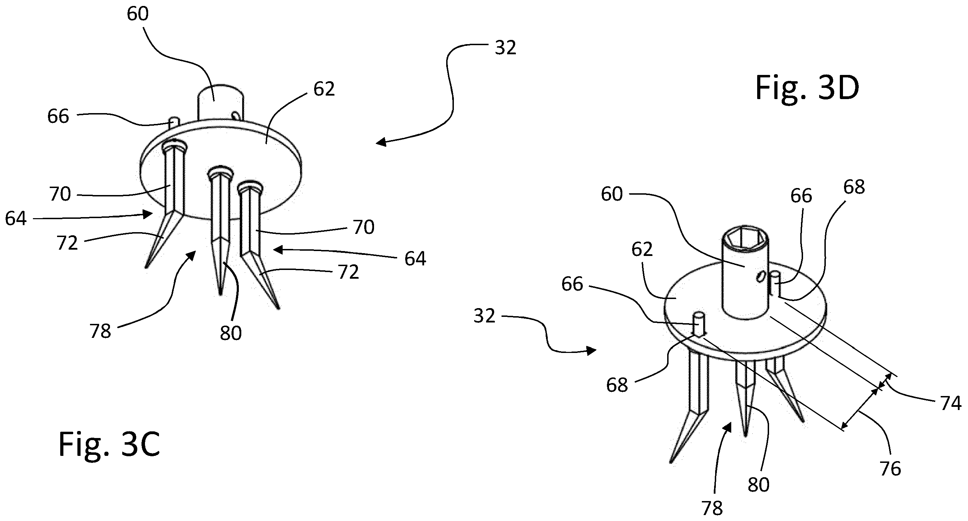

Die frontseitig am Aufbau 16 angeordnete Fräs- und/oder Bohreinheit 24 umfasst einen motorischen Drehantrieb 28 zum rotierenden Antrieb eines heb- und senkbaren Werkzeugkopfes 30 mit daran angeordnetem Fräs- und/oder Bohrwerkzeug 32 (vgl. hierzu auch die Figuren 3A, 3B, 3C und 3D). Durch eine vertikale Absenkbewegung in Pfeilrichtung A (vertikaler Doppelpfeil A) um einen definierten Betrag und gleichzeitigen rotierenden Antrieb des Werkzeugkopfes 30 mitsamt dem daran angeordneten mitrotierenden Fräs- und/oder Bohrwerkzeug 32 kann ein Pflanzloch 34 in den Boden 36 eingebracht werden, wie dies mit unterbrochener Linierung und zugehörigem Richtungspfeil angedeutet ist.

Die mittels des rotierenden Fräs- und/oder Bohrwerkzeuges 32 in den Boden 36 einbringbaren Pflanzlöcher 34 können durch die Ausstattung und Formgebung des Werkzeuges 32 in gewissen Grenzen beeinflusst werden, was weiter unten anhand einer beispielhaften Gestaltung einer sinnvoll einsetzbaren Variante des Fräs- und/oder Bohrwerkzeuges 32 unter Bezugnahme auf die insgesamt vier schematischen Perspektivansichten der Figuren 3A bis 3D erläutert werden soll.

Um diese Absenkbewegungen A in vertikale Richtung um eine definierte Tiefe 38 in den Boden 36 (sowie das anschließende Herausheben des Fräs- und/oder Bohrwerkzeuges 32 aus dem geschaffenen Pflanzloch 34) zu ermöglichen, ist die Fräs- und/oder Bohreinheit 24 vorzugsweise in der schematisch dargestellten Weise an einem vertikal heb- und senkbaren Trägerabschnitt 40 verankert, der wiederum an einem horizontalen Längsträger 42 befestigt sein kann, so dass der Trägerabschnitt 40 vorzugsweise entlang dem horizontalen Längsträger 42 in horizontaler Richtung verstellbar und damit gegenüber dem Aufbau 16 des Fahrzeuges 12 teleskopierbar ausgeführt ist.

Diese horizontale Verstellbarkeit des vertikalen Trägerabschnittes 40 mitsamt dem daran verankerten motorischen Drehantrieb 28 der Fräs- und/oder Bohreinheit 24 ist durch den horizontalen Doppelpfeil verdeutlicht, wobei die horizontale Verstellbarkeit mit B gekennzeichnet ist. Diese horizontale Verstellbarkeit B der am Aufbau 16 des Fahrzeuges 12 frontseitig angeordneten Fräs- und/oder Bohreinheit 24 ermöglicht eine Justierbarkeit und eine Abstandsveränderung zwischen der frontseitigen Fräs- und/oder Bohreinheit 24 und der heckseitigen Pflanzeinheit 26. Dies ist insbesondere dann sinnvoll, wenn die erfindungsgemäße mobile Pflanzvorrichtung 10 für unterschiedliche Pflanzabstände genutzt werden soll, da die eingestellte Distanz zwischen der frontseitigen Fräs- und/oder Bohreinheit 24 und der heckseitigen Pflanzeinheit 26 die Abstände der gesetzten Pflanzen definiert.

Die heckseitig am Aufbau 16 angeordnete Pflanzeinheit 26 umfasst im Wesentlichen ein vertikal verlaufendes Pflanzrohr 44, in welche die zu setzenden Pflanzen insbesondere manuell hineingegeben werden können, um in das jeweils vorbereitete Pflanzloch 34 eingesetzt zu werden, wenn sich die Pflanzeinheit 26 genau über dem passenden Pflanzloch 34 befindet. Die Pflanzeinheit 26 ist vorzugsweise mit einer hydraulischen Absenk- und Hebeeinrichtung 46 ausgestattet, die ein vertikales Absenken in Pfeilrichtung C sowie ein entsprechendes Anheben (siehe Doppelpfeil C an der Pflanzeinheit) an der passenden Position erlaubt.

Außerdem ist an der Unterseite des solchermaßen mittels der hydraulischen Absenk- und Hebeeinrichtung 46 heb- und senkbaren Pflanzrohrs 44 eine schwenkbare Klappe 48 angeordnet, die in geschlossener Lage einerseits das Pflanzrohr 44 unterseitig verschließt und verhindert, dass die in das Pflanzloch 34 einzusetzende Pflanze bereits vorzeitig nach unten aus dem Pflanzrohr 44 herausgleiten kann. Sobald das Pflanzrohr 44 in das vorbereitete Pflanzloch 34 abgesenkt ist, kann die schwenkbare Klappe 48 mittels eines hydraulischen Schwenkantriebes 50 geöffnet werden, um die Pflanze (nicht gezeigt) freizugeben, und um gleichzeitig mit Hilfe der Formgebung der Klappe 48 das Pflanzloch 34 bedarfsweise aufzuweiten, was etwa bei nachgerutschter Erde und teilweise eingefallenen Rändern des Pflanzlochs 34 sinnvoll sein kann.

Die möglichen Schwenkbewegungen der Klappe 48 zwischen ihrer geschlossenen Lage und der in den Figuren 1 und 2 gezeigten geöffneten Lage, die mittels des hydraulischen Schwenkantriebes 50 veranlasst werden können, sind durch den weiteren Doppelpfeil D verdeutlicht.

Vorzugsweise erfolgen die Absenkbewegungen A und C der Einheiten 24 und 26 annähernd gleichzeitig. Während die Fräs- und/oder Bohreinheit 24 den Boden 26 auflockert, setzt die Pflanzeinheit 26 in das gefräste oder gebohrte Loch 34 die jeweilige Pflanze. Durch die mechanisch oder hydraulisch am Trägerfahrzeug 12 verstellbare Fräs- und/oder Bohreinheit 24 wird automatisch der Abstand von Pflanze zu Pflanze in der Reihe festgelegt, und es muss nicht mehr gemessen werden oder eine Schnur bzw. Maßband gespannt werden bzw. Schrittmaß genommen werden. Durch den exakt eingehalten Abstand in der Reihe ist später eine maschinelle Pflege mit einer Mulch- oder Mähraupe o. dgl. Pflegemaschine möglich.

Ein weiterer Vorteil der beschriebenen Vorrichtung 10 besteht darin, dass üblicherweise verwendeten Containerpflanzen nicht erst aus dem Pflanzcontainer genommen werden müssen, um damit ein Pflanzaggregat zu bestücken, sondern die Pflanzen können direkt von Hand in das Pflanzrohr 44 gegeben werden und somit in gelenkter Weise direkt nach unten fallen.

Auch wenn dies in den Figuren 1 und 2 nicht eindeutig erkennbar ist, können sich die am Aufbau 16 des Fahrzeuges 12 frontseitig angeordnete Fräs- und/oder Bohreinheit 24 sowie die heckseitig angeordnete Pflanzeinheit 26 sinnvollerweise beide in Fluchtung in Längsrichtung befinden. Außerdem ist es sinnvoll, beide Einheiten 24 und 26 zwischen den Spuren der durch die Gurtbandlaufwerke 22 gebildeten Bodenantriebe des Fahrwerks 14 des Fahrzeuges 12 anzuordnen, vorzugsweise mittig, d.h. im Bereich der horizontalen Mittellängsachse des Fahrzeuges 12, bezogen auf dessen Fahrtrichtung.

Um die genannten wesentlichen Funktionen zu steuern sowie um die Vorwärts- und Rückwärtsfahrten des Fahrzeuges 12 zu steuern, befindet sich in einem hinteren Bereich des Fahrzeuges, an einem Rahmenausleger 52 für die Pflanzeinheit 26 auch ein Steuerterminal 54, das mit verschiedenen Betätigungshebeln 56 zur manuell vorgebbaren Funktionssteuerung der mobilen Pflanzvorrichtung 10 ausgestattet ist.

In den hier beschriebenen Figuren 1 und 2 soll die Festlegung gelten, dass sich die Fräs- und/oder Bohreinheit 24 frontseitig an der als Raupenfahrzeug ausgebildeten mobilen Pflanzvorrichtung 10 befindet, während das Antriebsaggregat 20 ungefähr mittig angeordnet ist. Die beiden Gurtbandlaufwerke 22 definieren somit die beiden Längsseiten des Raupenfahrzeuges. Somit befindet sich das Steuerterminal 54 mit den Betätigungshebeln 56 zur manuellen Funktionssteuerung im hinteren Bereich in Nähe der Pflanzeinheit 26, so dass das Steuerterminal 54 von einem hinter dem Fahrzeug 12 stehenden Benutzer 58 (vgl. Fig. 2) erreichbar ist, der damit auch mit seinen Händen an die Betätigungshebel 56 gelangt.

Die Antriebssteuerung des Fahrwerks 14 der erfindungsgemäßen mobilen Pflanzvorrichtung 10 kann wahlweise auch über eine Fernbedienung vorgegeben werden, so dass die Pflanzvorrichtung 10 ggf. auch mit einer semiautomatischen oder vollautomatischen Steuerung ausgestattet werden kann. Entsprechendes gilt für die Vorbereitung der Pflanzlöcher 34, da diese sinnvollerweise in der jeweils gleichen Tiefe zu setzen sind. Außerdem kann die Positionierung der Pflanzeinheit 26 über einem zuvor vorbereiteten Pflanzloch 34 in automatischer Weise durch entsprechende Vorwärtsbewegung des Fahrzeuges 12 mittels der Gurtbandlaufwerke 22 vorgegeben werden.

Da jedoch das Setzen der einzelnen Pflanzen in die vorbereiteten Pflanzlöcher 34 eine manuelle Betätigung verlangt, ist eine solche automatische Steuerung für die entsprechenden Funktionalitäten nicht gleichermaßen sinnvoll.

Es sei darauf hingewiesen, dass sich die Fig. 2 den gezeigten Details nicht nennenswert von der ausführlich erläuterten Fig. 1 unterscheidet. Die Fig. 2 zeigt lediglich die Position des Benutzers 58 hinter dem Fahrzeug 12, so dass er die Betätigungshebel 56 des Steuerterminals 54 bequem erreichen kann.

Anhand der schematischen und perspektivischen Ansichten der Figuren 3A bis 3D sollen schließlich zwei unterschiedliche Ausführungs- und Gestaltungsvarianten eines rotierenden Fräs- und/oder Bohrwerkzeuges 32 veranschaulicht werden, das an der erfindungsgemäßen mobilen Pflanzvorrichtung 10 zum Einsatz kommen kann.

Das gezeigte Fräs- und/oder Bohrwerkzeug 32 kann an der Fräs- und/oder Bohreinheit 24 (vgl. Fig. 1) montiert und bedarfsweise gegen ein anders gestaltetes Fräs- und/oder Bohrwerkzeug 32 ausgetauscht werden. Zu diesem Zweck ist das Werkzeug 32 mit einem oberseitigen Schaft 60 ausgestattet, welcher der lösbaren Verbindung des Werkzeuges 32 unterseitig am rotierenden Werkzeugkopf 30 (vgl. Fig. 1) dient. Der Schaft 60 mündet unterseitig in einer Trägerscheibe 62, welche die in den Figuren 3A bis 3D gezeigte flache Kontur mit kreisrundem Querschnitt aufweisen kann.

Unterseitig an der Trägerscheibe 62 ist mindestens ein Fräszinken 64 angeordnet, wobei die in den Figuren 3A und 3B gezeigte erste Ausführungsvariante zwei solcher Fräszinken 64 aufweist, die in ihrer jeweiligen Längsrichtung in mehrere Abschnitte unterteilt sind, die ineinander übergehen. Ein Verankerungsabschnitt 66 jedes der beiden Fräszinken 64 sorgt für deren jeweilige Verankerung in der Trägerscheibe 62, die hierfür jeweils mit passenden Durchbrüchen 68 ausgestattet ist. Die Figuren 3A, 3B, 3C und 3D lassen jeweils erkennen, dass die Verankerungsabschnitte 66 der beiden Fräszinken 64 die Durchbrüche 68 durchdringen und jeweils oberseitig aus der flachen Stirnseite der Trägerscheibe 62 herausragen.

Unterseitig setzt sich jeder der beiden Fräszinken 64 in einem vertikalen Zinkenabschnitt 70 mit konstantem Querschnitt fort, der in einer gegen den vertikalen Zinkenabschnitt 70 abgewinkelte Zinkenspitze 72 mündet. Die Zinkenspitzen 72 können gegenüber der jeweiligen Längsmittelachse des vertikalen Zinkenabschnittes 70 bspw. in einem Winkel von zwischen etwa 15° bis etwa 50° abgewinkelt sein. Somit ergibt sich das in den Figuren 3A bis 3D dargestellte Bild der beiden in der Trägerscheibe 62 verankerten Fräszinken 64, deren längerer vertikaler Abschnitt 70 unterseitig aus der Trägerscheibe 62 ragen und sich jeweils in ihren abgewinkelten Zinkenspitzen 72 fortsetzen, wobei die Zinkenspitzen 72 bspw. den gezeigten Winkel von etwa 15° bis 25° aufweisen können, um den sie gegenüber der jeweiligen Längsmittelachse des vertikalen Zinkenabschnittes 70 abgewinkelt sind.

Wie es die Fig. 3B verdeutlicht, sind die beiden Fräszinken 64 vorzugsweise nicht symmetrisch an gegenüberliegenden Stellen der Trägerscheibe 62 verankert, sondern weisen jeweils unterschiedliche Abstände zum Scheibenmittelpunkt auf, der konzentrisch zum Schaft 60 ist. So ist einer der beiden Durchbrüche 68 zur Aufnahme des oberen Verankerungsabschnittes 66 eines Fräszinkens 64 näher zum Schaft 60 hingerückt und weist vom Scheibenmittelpunkt einen kleineren Abstand 74 auf. Dieser Fräszinken 64 befindet sich somit näher am Schaft 60 sowie am Scheibenmittelpunkt. Dagegen ist der zweite Durchbruch 68 zur Aufnahme des oberen Verankerungsabschnittes 66 des anderen Fräszinkens 64 weiter vom Schaft 60 entfernt und weist vom Scheibenmittelpunkt einen größeren Abstand 76 auf. Dieser Fräszinken 64 befindet sich somit näher am äußeren Scheibenrand und ist weiter vom Schaft 60 sowie vom Scheibenmittelpunkt entfernt.

Durch diese unsymmetrisch an der Trägerscheibe 62 verankerten beiden Fräszinken 64 ergibt sich ein gewünschtes Fräsbild im Boden 36, das sich von einem typischen Bohrbild eines Erdbohrers unterscheidet, denn die abgewinkelten Fräszinken 64 lockern das Pflanzloch 34 unterschiedlich und unregelmäßig auf und sorgen dafür, dass keine regelmäßige Trichterform entsteht.

Außerdem kann zumindest eine der Verankerungen des oberen Verankerungsabschnittes 66 eines der beiden Fräszinkens 64 in einer Weise ausgestaltet sein, dass der Fräszinken 64 in unterschiedlichen Winkelpositionen bezüglich seiner Längsmittelachse im zugehörigen Durchbruch 68 der Trägerscheibe 62 montiert werden kann. D.h. zumindest einer der Fräszinken 64 kann um seine Längsmittelachse verdreht in der Trägerscheibe 62 montiert werden, wodurch auch die abgewinkelte Zinkenspitze 72 in eine andere Richtung weisen kann als die Zinkenspitze 72 des anderen Fräszinkens 64.

In den gezeigten Ausführungsbeispielen der Figuren 3A bis 3D weist die Zinkenspitze 72 desjenigen Fräszinkens 64, der den kleineren Abstand 74 zum Scheibenmittelpunkt aufweist, in radialer Richtung nach außen, wie es bei derartigen Werkzeugen 32 grundsätzlich zu erwarten wäre. Dagegen ist der andere Fräszinken 64, der den größeren Abstand 76 zum Scheibenmittelpunkt aufweist, in verdrehter Richtung montiert, so dass er um ca. 90° um seine Längsmittelachse verdreht montiert ist. Hierdurch weist seine Zinkenspitze 72 nicht radial nach außen, sondern weist in tangentiale Richtung zum Scheibenrand.

Vorzugsweise kann diese Drehposition mindestens eines der beiden Fräszinken 64 unterschiedlich gewählt werden, so dass durch unterschiedliche Drehwinkel, in denen der Fräszinken 64 montiert werden kann, die Aggressivität des rotierenden Fräs- und/oder Bohrwerkzeuges 32 variiert und entsprechend den jeweiligen Bedürfnissen beim Herstellen eines Pflanzlochs 34 eingestellt werden kann.

Die beiden schematischen und perspektivischen Ansichten der Figuren 3C und 3D lassen zudem eine weitere Variante des Fräs- und/oder Bohrwerkzeuges 32 erkennen, das zusätzlich mit einem mittigen Führungszinken 78 ausgestattet ist. Dieser optionale Führungszinken 78 fluchtet mit dem oberseitigen Schaft 60 des Werkzeuges 32 und befindet sich somit unterseitig im Scheibenmittelpunkt der Trägerscheibe 62, so dass er als stabilisierender Führungsdorn dienen kann, wenn das Werkzeug 32 in den Boden 36 eingesenkt wird, um dort ein Pflanzloch 34 herzustellen (vgl. Fig. 1).

Der optionale Führungszinken 78 kann hinsichtlich seiner Formgebung und seiner Dimensionierung mit den zur Spitze hin jeweils abgewinkelten Fräszinken 64 korrespondieren, wobei der wesentliche Unterschied darin besteht, dass die sich nach unten hin verjüngende Spitze 80 des Führungszinkens 78 nicht gegenüber seinem vertikalen Zinkenabschnitt 70 abgewinkelt ist, sondern sich von diesem vertikalen Zinkenabschnitt 70 in gestreckter Form weiter fortsetzt. Der Führungszinken 78 befindet sich somit in seiner ganzen Länge in der Mittelachse der Trägerscheibe 62 sowie des Schaftes 60 des Werkzeuges 32, so dass er die stabilisierende Funktion beim Herstellen von Pflanzlöchern 34 in gewünschter Weise ausüben kann.

Der gesamte übrige Aufbau des Werkzeuges 32 gemäß Figuren 3C und 3D, das mit dem Führungszinken 78 ausgestattet ist, unterscheidet sich nicht vom Aufbau des Werkzeuges 32 gemäß Figuren 3A und 3B, so dass auch eine nochmalige Beschreibung der Fräszinken 64, ihrer Formgebung und ihrer Anordnung an dieser Stelle verzichtet werden kann. Die einzelnen Elemente des Werkzeuges 32 gemäß Figuren 3C und 3D, das mit dem Führungszinken 78 ausgestattet ist, sind jedoch jeweils mit denselben Bezugsziffern bezeichnet, wie bei dem Werkzeug 32 gemäß Figuren 3A und 3B, so dass auf die entsprechenden Beschreibungspassagen verwiesen werden kann.

Wie es die Figuren 3A bis 3D erkennen lassen, können die Fräszinken 64 jeweils eine Gesamtlänge aufweisen, die in etwa mit dem Durchmesser der Trägerscheibe 62 übereinstimmen oder in einer ähnlichen Größenordnung liegen kann. Die Fräszinken 64 können jedoch wahlweise auch kürzer oder länger sein. Die Länge der abgewinkelten Zinkenspitze 72 kann vorzugsweise etwas geringer sein als die Länge des vertikalen Zinkenabschnittes 70.

Die Fräszinken 64 können wahlweise die gezeigten viereckigen Querschnitte aufweisen, wobei die vertikalen Zinkenabschnitte 70 konstante Querschnitte aufweisen können, während sich die Zinkenspitzen 72 jeweils zu ihren unteren spitzen Enden gleichmäßig verjüngen können, wahlweise ebenfalls mit viereckigen Querschnitten. Jedoch sind auch andere Querschnitte und Konturen der Fräszinken 64 möglich.

Vorzugsweise sind an der Trägerscheibe 62 mindestens zwei Fräszinken 64 in der beschriebenen Weise montierbar, wahlweise jedoch auch drei, vier oder mehr Fräszinken 64, die gleichmäßig oder ungleichmäßig verteilt an der Trägerscheibe 62 angeordnet sein können. Mindestens einer von mehreren Fräszinken 64 ist in kleinerem Abstand 74 zum Scheibenmittelpunkt an der Trägerscheibe 62 verankerbar. Mindestens einer von mehreren Fräszinken 64 ist zudem im größeren Abstand 74 zum Scheibenmittelpunkt an der Trägerscheibe 62 verankerbar. Mindestens einer von mehreren Fräszinken 64 ist zudem in unterschiedlichen Winkelpositionen um seine Längsmittelachse montierbar, so dass seine Zinkenspitze 72 nach außen oder in tangentiale Richtung zum Scheibenumfang weisen kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Mobiler Pflanzvorrichtung
- 12: Fahrzeug
- 14: Fahrwerk
- 16: Aufbau
- 18: Rahmen
- 20: Antriebsaggregat, motorischer Antrieb, Antriebsmotor
- 22: Gurtbandlaufwerke, Raupenlaufwerke, Kettenlaufwerke
- 24: Fräs- und/oder Bohreinheit
- 26: Pflanzeinheit
- 28: Drehantrieb, motorischer Drehantrieb
- 30: Werkzeugkopf, rotierender Werkzeugkopf
- 32: Fräs- und/oder Bohrwerkzeug, rotierendes Fräs- und/oder Bohrwerkzeug
- 34: Pflanzloch
- 36: Boden
- 38: Tiefe
- 40: vertikaler Trägerabschnitt
- 42: horizontaler Längsträger
- 44: Pflanzrohr
- 46: Absenk- oder Hebeeinrichtung
- 48: Klappe, schwenkbare Klappe
- 50: Schwenkantrieb
- 52: Rahmenausleger
- 54: Steuerterminal
- 56: Betätigungshebel
- 58: Benutzer
- 60: Schaft
- 62: Trägerscheibe
- 64: Fräszinken
- 66: Verankerungsabschnitt
- 68: Durchbruch
- 70: vertikaler Zinkenabschnitt
- 72: abgewinkelte Zinkenspitze
- 74: kleinerer Abstand
- 76: größerer Abstand
- 78: Führungszinken
- 80: Spitze (des Führungszinkens, nicht abgewinkelt)

- A: vertikale Hebe- oder Absenkbewegung (Fräs- und/oder Bohreinheit)
- B: horizontale Verstellbarkeit (Fräs- und/oder Bohreinheit)
- C: vertikale Absenk- oder Hebebewegung (Pflanzeinheit)
- D: Schwenkbewegungen (Klappe)

## Patentansprüche

1. Mobile Pflanzvorrichtung (10), insbesondere für den landwirtschaftlichen, für den forstwirtschaftlichen und/oder für den gartenbaulichen Einsatz, die ein insbesondere manuell gesteuertes und durch einen Benutzer (58) begleitetes Fahrzeug (12) mit motorischem Antrieb (20) umfasst, welches Fahrzeug (12) einen Aufbau (16) mit frontseitig angeordneter Fräs- und/oder Bohreinheit (24) zur Ausbildung von Pflanzlöchern (34) in einem Boden (36) und mit heckseitig angeordneter Pflanzeinheit (26) zum Einsetzen von Pflanzen in die jeweils vorbereiteten Pflanzlöcher (34) aufweist.

2. Mobile Pflanzvorrichtung (10) nach Anspruch 1, deren am Aufbau (16) des Fahrzeuges (12) frontseitig angeordnete Fräs- und/oder Bohreinheit (24) einen motorischen Drehantrieb (28) und einen heb- und senkbaren rotierenden Werkzeugkopf (30) mit daran angeordnetem Fräs- und/oder Bohrwerkzeug (32) aufweist.

3. Mobile Pflanzvorrichtung (10) nach Anspruch 2, deren Fräs- und/oder Bohrwerkzeug (32) mit mehreren abgewinkelten Fräszinken (64) ausgestattet ist, wobei insbesondere einer der wenigstens zwei abgewinkelten Fräszinken (64) eine anders winkelig ausgerichtete Zinkenspitze (72) aufweist als mindestens ein weiterer Fräszinken (64).

4. Mobile Pflanzvorrichtung (10) nach Anspruch 3, deren Fräs- und/oder Bohrwerkzeug (32) mit einem zentralen Führungszinken (78) ausgestattet ist, dessen Längserstreckungsrichtung in etwa mit einer Rotationsachse des Werkzeuges (32) korrespondiert.

5. Mobile Pflanzvorrichtung (10) nach einem der Ansprüche 1 bis 4, deren am Aufbau (16) des Fahrzeuges (12) frontseitig angeordnete Fräs- und/oder Bohreinheit (24) verstellbar ausgebildet ist.

6. Mobile Pflanzvorrichtung (10) nach Anspruch 5, deren am Aufbau (16) des Fahrzeuges (12) frontseitig angeordnete Fräs- und/oder Bohreinheit (24) sich zwischen den Spuren der Bodenantriebe des Fahrwerks (14) des Fahrzeuges (12) befindet und in horizontaler Längsrichtung (B) entlang des Aufbaus (16) verstellbar und/oder gegenüber dem Aufbau (16) teleskopierbar ist.

7. Mobile Pflanzvorrichtung (10) nach einem der Ansprüche 1 bis 6, deren heckseitig am Aufbau (16) des Fahrzeuges (12) angeordnete Pflanzeinheit (26) motorisch gegenüber dem Aufbau (16) heb- und senkbar ist, insbesondere im Zusammenhang mit dem Einsetzen von Pflanzen.

8. Mobile Pflanzvorrichtung (10) nach Anspruch 7, deren Pflanzeinheit (26) ein Fallrohr oder Pflanzrohr (44) mit unterseitig klappbarer Öffnung (48) zur Abgabe der Pflanze in das Pflanzloch (34) und/oder zum Aufweiten des jeweils im Boden (36) ausgebildeten Pflanzlochs (34) beim Einsetzen einer Pflanze aufweist.

9. Mobile Pflanzvorrichtung (10) nach einem der Ansprüche 1 bis 8, bei welcher das Fahrzeug (12) mit einem Fahrwerk (14) ausgestattet ist, das angetriebene Raupen- oder Kettenlaufwerke (22) zur fahrenden Ortsveränderung der mobilen Pflanzvorrichtung (10) umfasst.

10. Mobile Pflanzvorrichtung (10) nach Anspruch 7, deren zwei parallele Raupen- oder Kettenlaufwerke (22) unabhängig voneinander motorisch antreibbar und verzögerbar sind.

11. Mobile Pflanzvorrichtung (10) nach einem der Ansprüche 1 bis 10, die mit einem Steuerungsterminal (54) mit Betätigungshebeln (56) ausgestattet ist, welche manuelle Steuerungsvorgaben zur Steuerung der Fräs- und/oder Bohreinheit (24) bzw. deren Positionsveränderungen (A, B) gegenüber dem Aufbau (16), zur Steuerung der Pflanzeinheit (26) und/oder zur Antriebssteuerung der Raupen- oder Kettenlaufwerke (22) erlauben.

12. Verfahren zum regelmäßigen Setzen von Pflanzen mittels einer mobilen Pflanzvorrichtung (10), insbesondere im Zusammenhang mit einem landwirtschaftlichen, einem forstwirtschaftlichen und/oder einem gartenbaulichen Einsatz, wobei die mobile Pflanzvorrichtung (10) ein insbesondere manuell gesteuertes und durch einen Benutzer (58) begleitetes Fahrzeug (12) mit motorischem Antrieb (20) umfasst, wobei bei dem Verfahren mittels einer frontseitig am Fahrzeug (12) angeordneten Fräs- und/oder Bohreinheit (24) Pflanzlöcher (34) in einem Boden (36) ausgebildet werden, und wobei mit einer heckseitig am Fahrzeug (12) angeordneten Pflanzeinheit (26) Pflanzen in die jeweils vorbereiteten Pflanzlöcher (34) eingesetzt werden.

13. Verfahren nach Anspruch 12, bei dem die am Fahrzeug (12) frontseitig angeordnete Fräs- und/oder Bohreinheit (24) einen motorischen Drehantrieb (28) und einen heb- und senkbaren rotierenden Werkzeugkopf (30) mit daran angeordnetem Fräs- und/oder Bohrwerkzeug (32) aufweist, mit dem die Pflanzlöcher (34) in den Boden (36) eingebracht werden.

14. Verfahren nach Anspruch 12 oder 13, bei dem die Pflanzen mittels der ein Fallrohr oder Pflanzrohr (44) mit unterseitig klappbarer Öffnung (48) aufweisenden Pflanzeinheit (26) in das Pflanzloch (34) abgegeben und eingesetzt werden.

15. Verfahren nach einem der Ansprüche 12 bis 14, bei dem die Pflanzen in den Boden (36) eingesetzt werden, nachdem das jeweils im Boden (36) ausgebildete Pflanzloch (34) mittels der unterseitig klappbaren Öffnung (48) vor dem Einsetzen einer Pflanze aufgeweitet wurde.
